(19) **Europäisches Patentamt**
**European Patent Office**
**Office européen des brevets**

(11) **EP 2 878 974 A2**

(12) **EUROPEAN PATENT APPLICATION**

(43) Date of publication:
**03.06.2015 Bulletin 2015/23**

(51) Int Cl.:
*G01S 19/36* (2010.01)  *G01S 19/48* (2010.01)

(21) Application number: **14192212.0**

(22) Date of filing: **07.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.11.2013 US 201314078016**

(71) Applicant: **BlackBerry Limited
Waterloo, ON N2K 0A7 (CA)**

(72) Inventors:
• **Bani Hani, Mohammad Shafiq
Niles, IL Illinois 60714 (US)**
• **Bernhardt, Bruce Allen
Wauconda, IL Illinois 60084 (US)**
• **Sheynman, Arnold
Northbrook, IL Illinois 60062 (US)**

(74) Representative: **Bryn-Jacobsen, Caelia et al
Kilburn & Strode LLP
20 Red Lion Street
London WC1R 4PJ (GB)**

(54) **Method and system for implementing a dual-mode dual-band GNSS/M-LMS pseudolites receiver**

(57)   A method, device and circuit for determining a position of a mobile cellular communication device is disclosed. A pseudolites positioning signal is received in a first frequency band at an antenna of the mobile cellular communication device. The pseudolites signal is converted from the first frequency band to a Global Navigation Satellite System (GNSS) frequency band to obtain a corresponding positioning signal in the GNSS frequency band. The converted positioning signal is delivered to a GNSS chipset of the mobile cellular communication device. The GNSS chipset determines the position of the mobile cellular communication device using the converted positioning signal.

FIG. 1

EP 2 878 974 A2

**Description**

BACKGROUND

In most mobile devices, there exists a Global Positioning System (GPS) receiver and circuitry or Global Navigation Satellite System (GNSS) receiver and circuitry that provide two-dimensional positioning of the mobile device to within a given accuracy. Although GPS receiver systems provide accurate positioning of the mobile device when operated in an outdoor environment or in open sky conditions, indoor positioning (where GNSS signals are typically weak) continues to be a challenge. As one alternative, some mobile devices may determine a position using a signal obtained from a terrestrial-based positioning system such as terrestrial-based pseudo-satellites (or "pseudolites"). Pseudolites transmit positioning signals using the Multilateration Location and Monitoring Service (M-LMS) frequency band, which ranges from about 902 Megahertz (MHz) to about 928 MHz. The mobile communication device may, therefore, include a pseudolites positioning engine for determining position using pseudolite positioning signals. However, such an engine takes up valuable space on the receiver chipset and may require the mobile device to increase its energy expenditure, thereby reducing battery life.

BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates a schematic diagram of an exemplary mobile communication device that includes circuitry for determining a position of the mobile communication device using the methods disclosed herein;
Figure 2 illustrates frequencies used in the up-conversion process in which pseudolites (M-LMS) positioning signals are converted to a corresponding representative positioning signal in a GNSS frequency band;
Figure 3 illustrates a schematic representation of operation of a mixing unit in order to up-convert M-LMS signals to a GNSS frequency band;
Figure 4 illustrates a software architecture and high-level system diagram for a dual band/dual mode GNSS/M-LMS receiver according to an exemplary embodiment;
Figure 5 illustrates a schematic higher-level diagram illustrating a system suitable for determining position measurements corrected for altitude;
Figure 6 illustrates an exemplary relation between atmospheric pressure and altitude;
Figure 7 illustrates another embodiment of a system suitable for determining position measurements corrected for altitude;
Figure 8 illustrates a flow diagram illustrating an exemplary method of the present disclosure;
Figure 9 illustrates an example of a system suitable for implementing one or more embodiments disclosed herein;
Figure 10 illustrates a wireless-enabled communications environment including an embodiment of a client node as implemented in an embodiment of the disclosure; and
Figure 11 illustrates a block diagram of an exemplary client node as implemented with a digital signal processor (DSP) in accordance with an embodiment of the disclosure.

DETAILED DESCRIPTION

The present disclosure provides a method and apparatus for using an existing GPS/GNSS (Global Positioning System/Global Navigation Satellite System) receiver chipset in a mobile device to determine a position of the mobile device using pseudolites positioning signals. The present disclosure provides modifications to a GPS RF (radio frequency) front end of the mobile device as well as the addition of components to facilitate switching between either GPS or M-LMS components of the RF front end, depending on the frequency band of an incoming positioning signal (e.g., 926 MHz M-LMS band or 1575.42 MHz L1 band).
The present disclosure uses a single existing GNSS chipset to receive and decode both M-LMS signals and GNSS signals. The use of a single GNSS chipset reduces costs and energy usage compared to using separate chipsets for GNSS signals and M-LMS Pseudolite signals. In addition, the complexity of the system is reduced by using a single GNSS chipset receiver and selecting an RF front end that corresponds to the frequency band of the received positioning signals.
A selected RF front end herein may provide an up-conversion of signals from the M-LMS frequency band to a corresponding signal in the GNSS frequency band, which may be an L1, L2, L5 band, etc. The up-converted signals may be sent to the GNSS chipset, so that the GNSS chipset receives signals in the GNSS frequency band regardless of the frequency band that is received at the antenna of the RF front end.

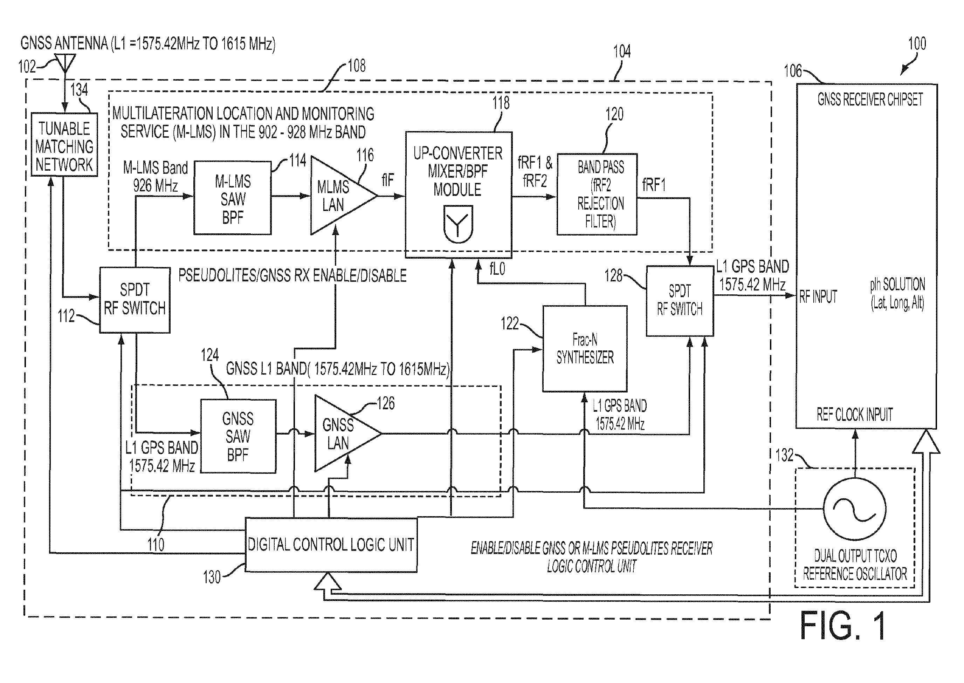

Figure 1 illustrates a schematic diagram of an exemplary mobile communication device 100 that includes circuitry for determining a position of the mobile communication device using the methods disclosed herein. The diagram includes an antenna 102 coupled to a radio frequency (RF) front end 104 of the mobile communication device, which is in turn coupled to a Global Navigation Satellite System (GNSS) receiver chipset 106. Positioning signals are received at the antenna 102 and sent to the RF front end 104. The RF front end 104 processes the positioning signal by filtering the signal, removing noise, etc., and delivers the processed positioning signal to the GNSS chipset 106. The GNSS chipset 106 may perform various processes or operations on the positioning signals received from the RF front end 104 in order to calculate or determine a location of the mobile communication device 100.

In one embodiment, the antenna 102 may be capable of receiving signals, such as positioning signals, over various frequency bands. In particular, the antenna 102 may receive GNSS positioning signals within a GNSS frequency band, such as an L1 band (at about 1575.42 Megahertz (MHz)). The antenna 102 may also receive Multilateration Location and Monitoring Service (M-LMS) pseudolites signals within an M-LMS frequency band (about 902 MHz to about 928 MHz) The antenna 102 may be coupled to a tunable matching network module 134 that may be used to select the operating frequency band of the antenna 102. The tunable matching network module 134 may be either an analog device, an application-specific integrated circuit (ASIC) device or other suitable implementation.

The RF front end 104 includes a first circuit branch 108 (i.e., an RF front end M-LMS circuit branch) and a second circuit branch 110 (i.e., an RF front end GNSS circuit branch) and a switch 112 that selects either the first circuit branch 108 or the second circuit branch 110. The first circuit branch 108 includes circuitry for processing pseudolites signals and converting (i.e., up-converting) the pseudolites signals from the pseudolites frequency range to the appropriate GNSS frequency range. The second circuit branch 110 includes circuitry for processing GNSS positioning signals. The first circuit branch 108 and the second circuit branch 110 are in parallel with each other and are alternately selected. The switch 112 selects the first circuit branch when the received positioning signals at the antenna 102 are pseudolites positioning signals and selects the second circuit branch when the received positioning signals at the antenna 102 are GNSS positioning signals.

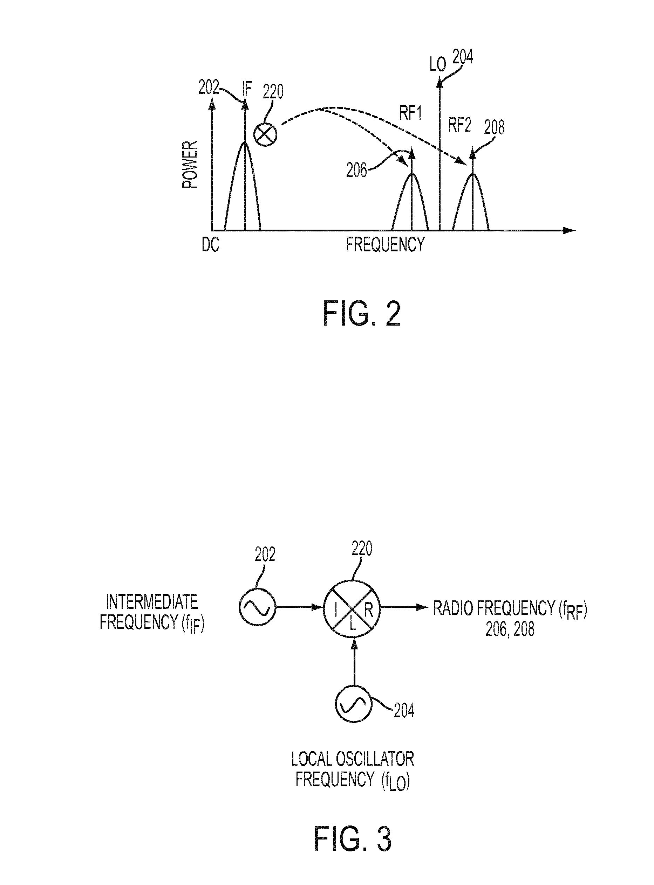

The first circuit branch 108 includes an M-LMS SAW (surface acoustic wave) band pass filter 114, an M-LMS low noise amplifier (LNA) 116, up-converter module 118 and rejection filter 120. The pseudolites positioning signals from the antenna 102 are filtered at the M-LMS SAW band pass filter 114 to remove noise and unwanted signals. The filtered signal is then amplified at the M-LMS LNA 116. The up-converter module 118 receives the amplified signal from the M-LMS LNA 116 and up-converts the amplified signal to obtain a signal in the GNSS frequency band that is representative of the corresponding pseudolites positioning signal. The up-converter module 118 is coupled to a Fractional-N (Frac-N) Synthesizer 122 that provides a signal to the up-converter module 118 that is used in the up-conversion process. The Frac-N synthesizer 122 operates off a clock 132 of the mobile device and provides a frequency known as a local oscillator frequency to the up-converter module 118 that may be used in the up-conversion process. The up-converter module 118 generally performs an operation that creates the signal that is in the GNSS frequency band and at least one other signal at another frequency. The rejection filter 120 removes the at least one other signal so that only the up-converted GNSS positioning signal residing in the selected GNSS frequency band is sent to the GNSS chipset 106. In various embodiments, the rejection filter 120 may be a band pass filter or a low pass filter. A detailed discussion of the up-converter module 118 and the rejection filter 120 are provided with respect to Figure 2.

The second circuit branch 110 includes a GNSS SAW band pass filter 124 for removing noise and unwanted signals from a GNSS signal received at antenna 102. The second circuit branch 110 further includes a GNSS LNA 126 for amplifying the filtered GNSS signal.

Switch 128 is coupled to a back end of the first circuit branch 108, the back end of the second circuit branch 110 and an input to the GNSS receiver chipset 106 and selects a signal from one of the first circuit branch 108 and the second circuit branch 110 to deliver to the GNSS chipset 106. Switch 128 is synchronized with the switch 112 such that when switch 112 selects the first circuit branch 108, switch 128 also selects the first circuit branch 108. Similarly, when switch 112 selects the second circuit branch 110, switch 128 also selects the second circuit branch 110.

A control unit 130 is coupled to various components of the mobile device 100 and controls various operations of the RF front end 104. The control unit 130 may be used to operate various circuit elements, such as the M-LMS LNA 116, the GNSS LNA 126, the up-converter module 118, the Frac-N synthesizer 122 and a tunable matching network 134. Additionally, the control unit 130 may be used to flip the switches 112 and 128 into their various positions to select either the first circuit branch 108 or the second circuit branch 110. In one embodiment, the control unit 130 may enable the circuit elements of a selected branch (e.g., the first branch 108) while disabling the circuit elements of the non-selected branch (e.g., the second branch 110), thereby reducing the expenditure of energy on circuit elements that are not being used. The control unit 130 may also switch the antenna matching network 134 to be responsive to a selected frequency band.

As shown in Figure 1, a single antenna 102 may be used to receive both GNSS and Pseudolite signals. If received GNSS signals are reliable, GNSS signals may be sent to the GNSS chipset 106 via the second circuit branch 110. If the received GNSS signals are weak or not reliable, the control unit 130 may switch the input from the antenna 102 to the first circuit branch 108 as well as the tuning frequency of the tunable matching network module 134, so that M-LMS positioning signals may be used to determine position using the methods disclosed herein. For weak GNSS signals, the M-LMS positioning signals may be sent to the GNSS chipset 106 via the first circuit branch 108.

Figure 2 illustrates frequencies used in the up-conversion process in which pseudolites positioning signals are converted to a corresponding representative positioning signal in a GNSS frequency band. The up-conversion process may be performed using the up-converter module 118, the Frac-N synthesizer 122 and the rejection filter 120 of Figure 1. In one embodiment, the Frac-N synthesizer 122 is operated based on a frequency supplied by clock 132. The clock 132 may be a temperature-controlled crystal oscillator (TCXO) clock. In various embodiments, the clock 132 may be a dedicated clock for providing a clock frequency to certain elements of the positioning chipset such as the GNSS chipset 106 and the Frac-N synthesizer 122. The Frac-N synthesizer 122 generates an appropriate local oscillator (LO) frequency off the clock frequency. The LO frequency is sent to the up-converter module 118 for use in the up-conversion process.

Figure 2 illustrates a frequency spectrum upon which the various signals of the up-conversion process are displayed. An intermediate frequency (IF) signal 202 represents the received M-LMS signal. The LO signal 204 represents a signal at a frequency provided by the Frac-N synthesizer 122. The LO signal 204 may be either a sinusoidal continuous wave signal or a square wave signal generated by the Frac-N synthesizer 122. A mixing unit 220 of the up-converter module 118 mixes the IF signal 202 with the LO signal 204 to generate up-converted RF signals, RF1 (206) and RF2 (208). In the exemplary embodiment, one of the up-converted signals (e.g., signal RF1 206) falls within the GNSS band while the other signal (e.g., signal RF2 208) falls outside of the GNSS frequency band. The signal within the GNSS frequency band may be delivered to the GNSS receiver chipset 106 to determine the position of the mobile device 100, while the other signal is filtered out.

Figure 3 illustrates a schematic representation of the operation of the mixing unit 220 in order to up-convert M-LMS signals to a GNSS frequency band. The mixing unit 220 includes a first port for receiving the IF signal 202, a second port for receiving the LO signal 204 and a third port for outputting the RF signals 206 and 208. The mixing unit 220 mixes the LO signal 204 and the IF signal 202 to produce a low-side RF signal 206 and a high-side RF signal 208 at the output, wherein the low-side RF signal 206 has a frequency lower than the frequency of the LO signal 204 and the high-side RF signal 208 has a frequency higher than the frequency of the LO signal 204.

The equations for mixing the IF signal 202 and the LO signal 204 to produce the high-side RF signal 208 and the low-side RF signal 206 are stated in Equation (1):

$$f_{RF1} = f_{LO} - f_{IF};$$

$$f_{RF2} = f_{LO} + f_{IF}. \qquad \text{Eq. (1)}$$

where $f_{RF1}$ represents the frequency of the low-side RF signal 206, $f_{RF2}$ represents the frequency of the high-side RF signal 208, $f_{LO}$ represents the local oscillator frequency provided by the Frac-N synthesizer 122 and $f_{IF}$ represents the frequency of the M-LMS positioning signal. In an exemplary embodiment, the $f_{IF}$ = 925.977 MHz and $f_{LO}$ = 2501.397 MHz. Therefore, $f_{RF1}$ = 1575.42 MHz and $f_{RF2}$ = 3427.374 MHz. Thus, frequency $f_{RF1}$ is in the GNSS band and frequency $f_{RF2}$ is filtered out using filter 120.

In one embodiment, the LNA 116 is added to the first circuit branch 108 in order to compensate for any conversion losses that may occur during the mixing process. The SAW filter 114 and LNA 116 together have a low noise range of less than about 1.5 decibels (dB) and an LNA gain that goes up to about 25 dB for the M-LMS band. A mixer conversion loss may be defined as

$$CL = Pwr\_dBm\_RF - Pwr\_dBm\_IF. \qquad \text{Eq. (2)}$$

A standard M-LMS band mixer conversion loss may be from about 7dB to about 10 dB. The mixing unit 220 generally exhibits good isolation between all three ports (i.e., LO to RF, LO to IF, RF to IF). An expected isolation between ports is from about 25 dB to about 35 dB.

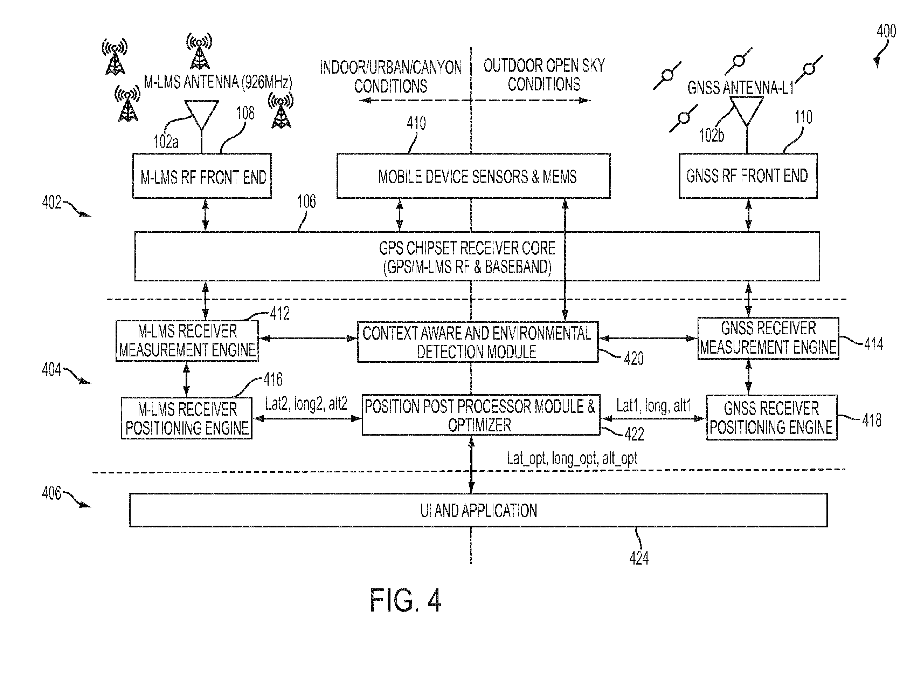

Figure 4 illustrates a software architecture and high-level system diagram 400 for a dual band/dual mode GNSS/M-LMS receiver according to an exemplary embodiment. The software architecture 400 illustrates a hardware layer 402 that includes components for receiving the M-LMS/GNSS signals at the mobile device and a software layer 404 that includes various engines used in determining the position of the mobile device. Finally, a user interface level 406 is shown which provides interaction with the user of the mobile device.

The hardware layer includes M-LMS antenna 102a and GNSS antenna 102b, which in the present embodiment, are the same antenna, such as antenna 102 of Figure 1. As shown in Figure 4, the GNSS antenna 102b is generally usable in outdoor open sky conditions or similar conditions in which GNSS signals received at the mobile device are strong. The M-LMS antenna 102a is used in indoor conditions, urban conditions, canyon conditions or in similar conditions in which received GNSS signals are poor or weak. The hardware layer 402 further includes mobile device sensors and MEMS (micro-electromechanical sensors) 410, which may be used to measure parameters that may be used to determine the particular condition (i.e., indoor or outdoor) of the mobile device so that the appropriate antenna (102a, 102b) is used to received positioning signals.

The software layer 404 includes an M-LMS Receiver Measurement Engine 412, a GNSS Receiver Measurement Engine 414, an M-LMS Receiver Positioning Engine 416, a GNSS Receiver Positioning Engine 418, a Context Aware and Environmental Detection Module 420 and a Position Post Processor Module & Optimizer 422.

The M-LMS Receiver Measurement Engine 412 is an embedded software module that resides in memory of the GNSS chipset 106. The M-LMS Receiver Measurement Engine 412 is responsible for measuring and decoding received pseudolite beacon signals and providing appropriate raw M-LMS pseudolite measurements and parameters. These parameters may include, but are not limited to, pseudolite network timing information, correlation sample vectors, RSSI (Received Signal Strength Indicator) and system noise floor, receiver front end related quality and AGC (automatic gain control) settings, pseudolite beacon status information, PRN (pseudorandom noise) gold codes and any pseudolite ephemeris related information, beacon signal types, frequency offsets and frequency correction parameters, pseudolite beacon transmitter health information, beacon transmitter almanacs and any other related raw parameters of the received pseudolite beacon signals.

The GPS/GNSS Receiver Measurement Engine 414 is an embedded software module that resides memory of the GNSS chipset. The GPS/GNSS Receiver Measurement Engine 414 is responsible for measuring and decoding received satellite global position system signals and providing appropriate GPS raw measurements and parameters. These parameters may include, but are not limited to, extracting satellite DOP (dilution of precision), satellite pseudo ranges, PRN gold codes information, correlation peak samples and correlation vectors, GPS Time of Week and GPS frequency offset and correction parameters, satellite almanacs, GPS satellites data messages and extracting ephemeris data, and any related GPS aiding information provided by a cellular network.

The M-LMS Receiver Positioning Engine 416 calculates user position using the received M-LMS data and M-LMS beacon ranges. Each pseudolite beacon position is well-defined. The M-LMS Receiver Positioning Engine 416 may solve for three-dimensional positioning using three or more beacon signals by extracting user coordinates and calculating either a static single point position fix or a dynamic position fix using, for example, an extended Kalman filter. Two-dimensional horizontal position accuracy depends on good geometry of the pseudolite beacons and good received signal and acceptable cross-correlation performance of the pseudolite system. Final position coordinates assume an ellipsoidal solution of latitude, longitude and altitude.

The GNSS Receiver Positioning Engine 418 receives raw GPS satellite data extracted from the GNSS Receiver Measurement Engine 414. The extracted data may include correlation samples, pseudo ranges and timing information. The GNSS Receiver Positioning Engine 418 may estimate the user position based on using standard GPS position estimation algorithms such as least square methods. The GNSS Receiver Positioning Engine 418 may provide either a single point position fix or a dynamic fix using, for example, an extended Kalman filter. Final position coordinates assume an ellipsoidal solution of latitude, longitude and altitude.

The Context Aware and Environmental Detection Module 420 is a generic sensing and detection software module and engine that determines an environment of the mobile device. The Context Aware and Environmental Detection Module 420 takes into account the mobile device sensors such as an accelerometer, a gyroscope and a pressure sensor which may determine linear acceleration or motion of the mobile device in order to determine a position of the mobile device. Additionally, the sensors may include motion-sensing MEMS sensors, imagers, light sensors and pressure sensors, for example.

The Context Aware and Environmental Detection Module 420 provides an estimate of the environment that surrounds the mobile device. As an example, the Context Aware and Environmental Detection Module 420 may determine that the device is being operated in an indoor environment when light levels, pressure and temperature measurements and other recognized elements of the environment indicate that the user is indoors. The Context Aware and Environmental Detection Module 420 may be a generic context aware engine that takes multiple sensor parameters into consideration before it determines the indoor/outdoor environment. Once the environment has been determined with sufficient confidence, the appropriate method (GPS based or M-LMS based) is selected for determining position.

The Position Post Processor Module and Optimizer 422 post-processes positioning engines results and provides an optimized final position. The accuracy of the final position may be enhanced by leveraging the M-LMS Positioning and Measurement Engines (412 and 416) and the GPS Positioning and Measurement Engines (414 and 418), either separately or in combination.

In operation, the M-LMS RF front end 108 and the M-LMS Receiver Measurement Engine 412, as a unit, may not be turned ON simultaneously with the GNSS RF front end 110 and the GNSS Receiver Measurement Engine 414, as a unit. However, the M-LMS Receiver Positioning Engine 416 and the GNSS Receiver Positioning Engine 418 may be turned ON simultaneously.

The M-LMS Receiver Positioning Engine 416 and the GNSS Receiver Positioning Engine 418 may be used simultaneously when the raw measured data (from GPS and/or M-LMS) have been stored in memory and when the Position Post Processor Module and Optimizer 422 accesses the raw position data from either or both of the positioning engines 416 and 418. A final position may be based on several parameters including data from the Context Aware and Environmental Detection Module 420 indicating the environment of the mobile device. The measured raw data may be processed simultaneously when the positioning engines 416 and 418 reside in the mobile device host. The two measurement engines (GPS and M-LMS) may reside on the actual GNSS chipset and the GNSS chipset may boot up from either engine.

The User Interface and Application 424 is the top layer application interface including interfaces to a native positioning application or to a user interface that can leverage the final position from the optimizer module and present the position data to a local map application or to a remote network server.

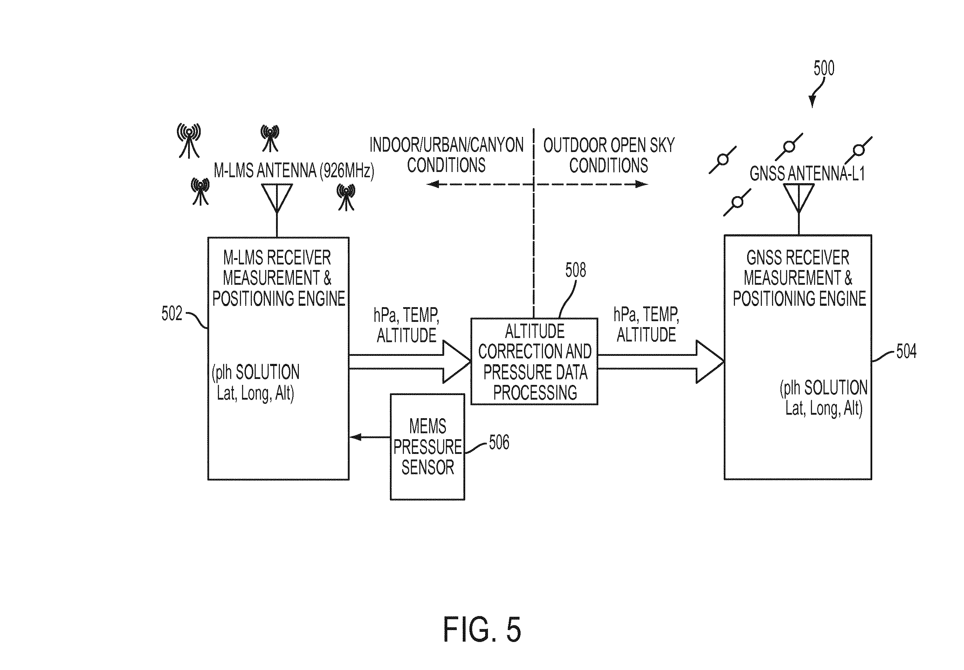

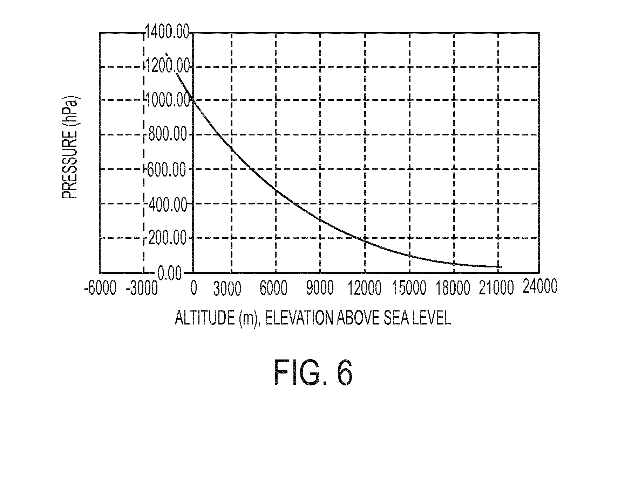

Figure 5 illustrates a schematic higher-level diagram illustrating a system 500 suitable for determining position measurements corrected for altitude. The system 500 includes both M-LMS Receiver Measurement and Positioning Engine 502 and GNSS Receiver Measurement and Positioning Engine 504. MEMS pressure sensors 506 provide atmospheric pressure measurements to the M-LMS Receiver Measurement and Positioning Engine 502. The atmospheric pressure measurements from the MEMS pressure sensors 506 may be used to estimate an altitude at either the M-LMS Receiver Measurement and Positioning Engine 502 or the Altitude Correction and Pressure Data Processing Module 508. The estimated altitude may be provided to the GNSS Receiver Measurement and Positioning Engine 504 and thus be used to correct GNSS position measurements for altitude. Figure 6 illustrates an exemplary relation between atmospheric pressure and altitude. The pressure-to-altitude conversion obeys Eq. (3) below:

$$P_a = P_0(1 - 6.87535 * 10^{-6})^{5.2561} \qquad \text{Eq. (3)}$$

where $P_a$ is the air atmospheric pressure at altitude $H_c$ at a given sea level pressure $P_0$.

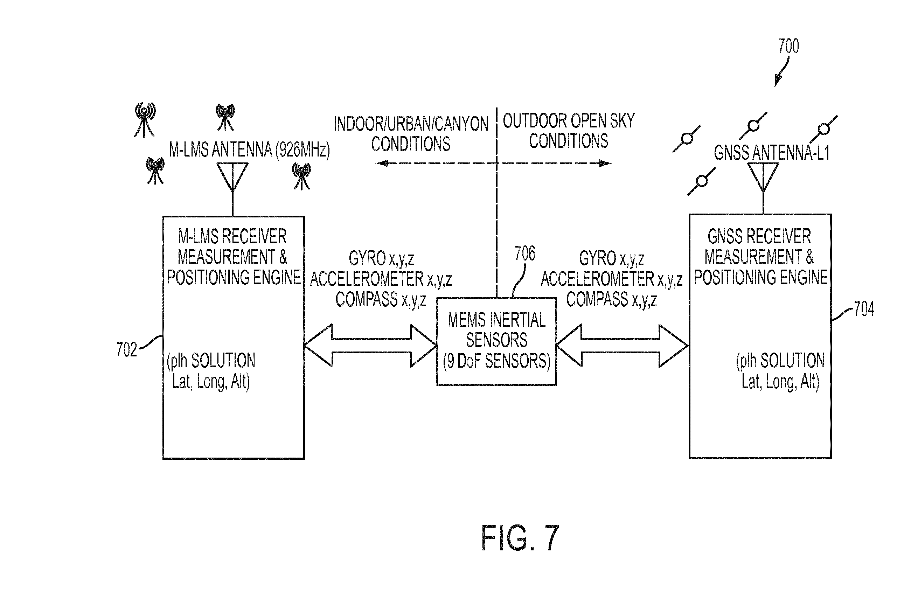

Figure 7 illustrates another embodiment of a system 700 suitable for determining reference position measurements to be used to correct for dead-reckoning sensor biases. The system includes M-LMS Receiver Measurement and Positioning Engine 702 and GNSS Receiver Measurement and Positioning Engine 704. MEMS inertial navigation sensor unit 706 is directly coupled to both the M-LMS Receiver Measurement and Positioning Engine 702 and GNSS Receiver Measurement and Positioning Engine 704. Therefore, the inertial position based measurements may be processed at either engine (702, 704) in order to obtain a reference position data point to be used to correct for inertial sensor dead-reckoning biases and errors. Other sensors may also be coupled to the engines 702 and 704 in order to enhance the navigation performance and improve position accuracy when weak GNSS or M-LMS signals are present.

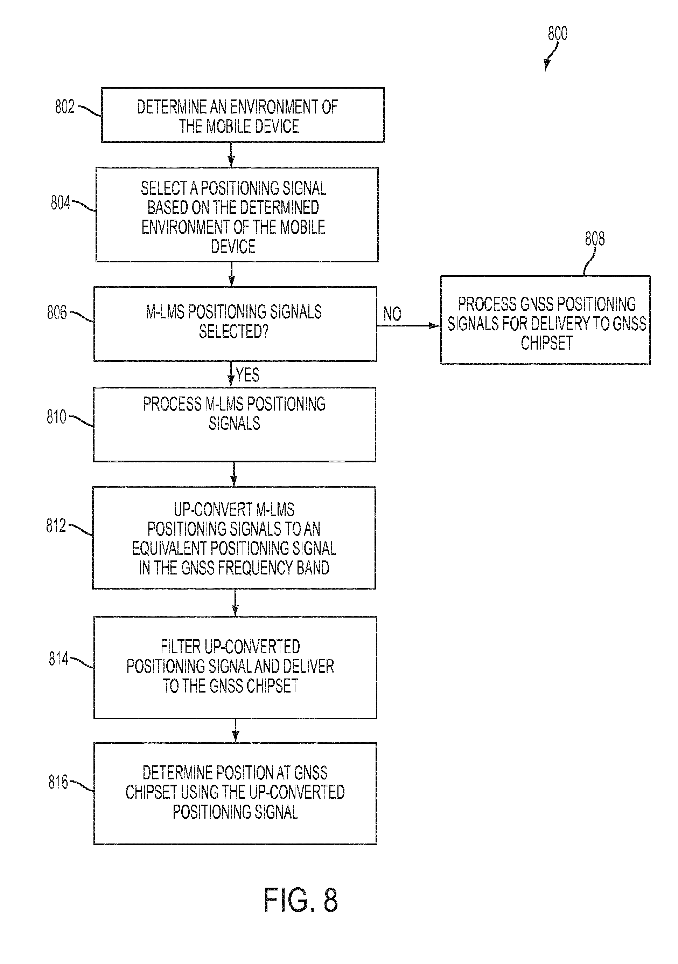

Figure 8 illustrates a flow diagram 800 illustrating an exemplary method of the present disclosure. In box 802, the environment of the mobile device is determined. The environment may be an indoor environment or an outdoor environment and may be determined using various sensors of the mobile device. In box 804, the determination of the environment may be used to select a frequency band of a positioning signal, such as the M-LMS frequency band or a GNSS frequency band.

In box 806, if the M-LMS frequency band is not selected, the method proceeds to box 808, in which GNSS signals are received, processed and delivered to the GNSS chipset in order to obtain a position of the mobile device. Returning to box 806, if the M-LMS frequency bad is selected, the method proceeds to box 810 in which M-LMS positioning signals are received and processed to reduce noise and amplify the positioning signals. In box 812, the positioning signals are up-converted from the M-LMS frequency band to the GNSS frequency band. In box 814, the up-converted positioning signals are filtered and the filtered up-converted positioning signals are delivered to the GNSS chipset. In box 816, the GNSS chipset determines the position of the mobile device using the up-converted signals or the GNSS signal.

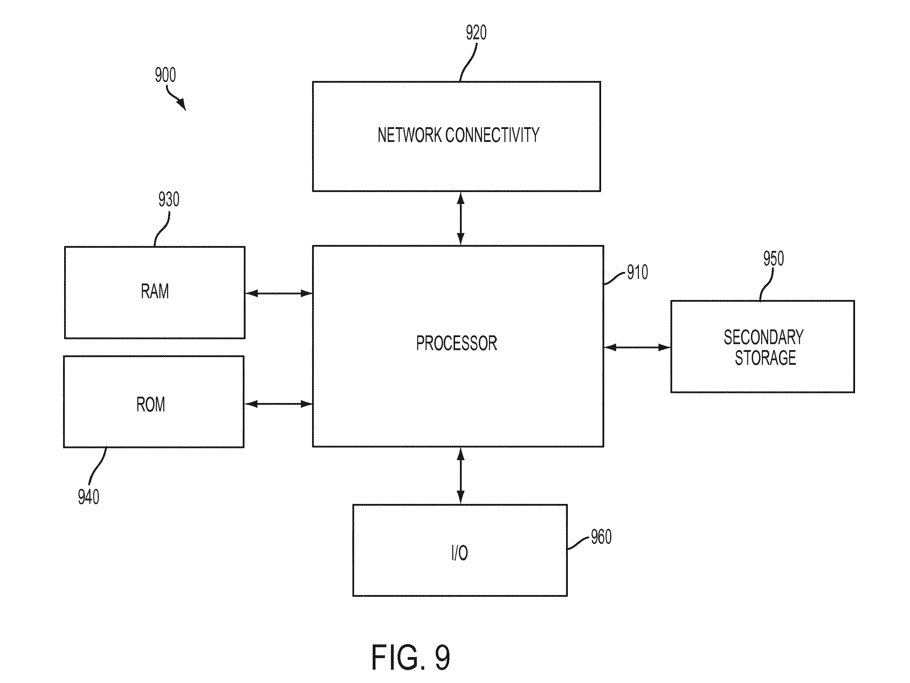

Figure 9 illustrates an example of a system 900 suitable for implementing one or more embodiments disclosed herein. In various embodiments, the system 900 comprises a processor 910, which may be referred to as a central processor unit (CPU) or digital signal processor (DSP), or Application Processor (AP), network connectivity interfaces 920, random access memory (RAM) 930, read only memory (ROM) 940, secondary storage 950, and input/output (I/O) devices 960. In some embodiments, some of these components may not be present or may be combined in various combinations with one another or with other components not shown. These components may be located in a single physical entity or in more than one physical entity. Any actions described herein as being taken by the processor 910 might be taken by the processor 910 alone or by the processor 910 in conjunction with one or more components shown or not shown in Figure 9.

The processor 910 executes instructions, codes, computer programs, or scripts that it might access from the network connectivity interfaces 920, RAM 930, or ROM 940. While only one processor 910 is shown, multiple processors may be present. Thus, while instructions may be discussed as being executed by a processor 910, the instructions may be executed simultaneously, serially, or otherwise by one or multiple processors 910 implemented as one or more CPU chips.

In various embodiments, the network connectivity interfaces 920 may take the form of modems, modem banks, Ethernet devices, universal serial bus (USB) interface devices, serial interfaces, token ring devices, fiber distributed data interface (FDDI) devices, wireless local area network (WLAN) devices (including radio, optical or infra-red signals), radio transceiver devices such as code division multiple access (CDMA) devices, global system for mobile communications (GSM) radio transceiver devices, long term evolution (LTE) radio transceiver devices, worldwide interoperability for microwave access (WiMAX) devices, and/or other well-known interfaces for connecting to networks, including Personal Area Networks (PANs) such as Bluetooth. These network connectivity interfaces 920 may enable the processor 910 to communicate with the Internet or one or more telecommunications networks or other networks from which the processor 910 might receive information or to which the processor 910 might output information.

The network connectivity interfaces 920 may also be capable of transmitting or receiving data wirelessly in the form of electromagnetic waves, such as radio frequency signals or microwave frequency signals. Information transmitted or received by the network connectivity interfaces 920 may include data that has been processed by the processor 910 or instructions that are to be executed by processor 910. The data may be ordered according to different sequences as may be desirable for either processing or generating the data or transmitting or receiving the data.

In various embodiments, the RAM 930 may be used to store volatile data and instructions that are executed by the processor 910. The ROM 940 shown in Figure 9 may likewise be used to store instructions and data that is read during execution of the instructions. The secondary storage 950 is typically comprised of one or more disk drives, solid state drives, or tape drives and may be used for non-volatile storage of data or as an overflow data storage device if RAM 930 is not large enough to hold all working data. Secondary storage 950 may likewise be used to store programs that are loaded into RAM 930 when such programs are selected for execution. The I/O devices 960 may include liquid crystal displays (LCDs), Light Emitting Diode (LED) displays, Organic Light Emitting Diode (OLED) displays, projectors, televisions, touch screen displays, keyboards, keypads, switches, dials, mice, track balls, track pads, voice recognizers, card readers, paper tape readers, printers, video monitors, or other well-known input/output devices.

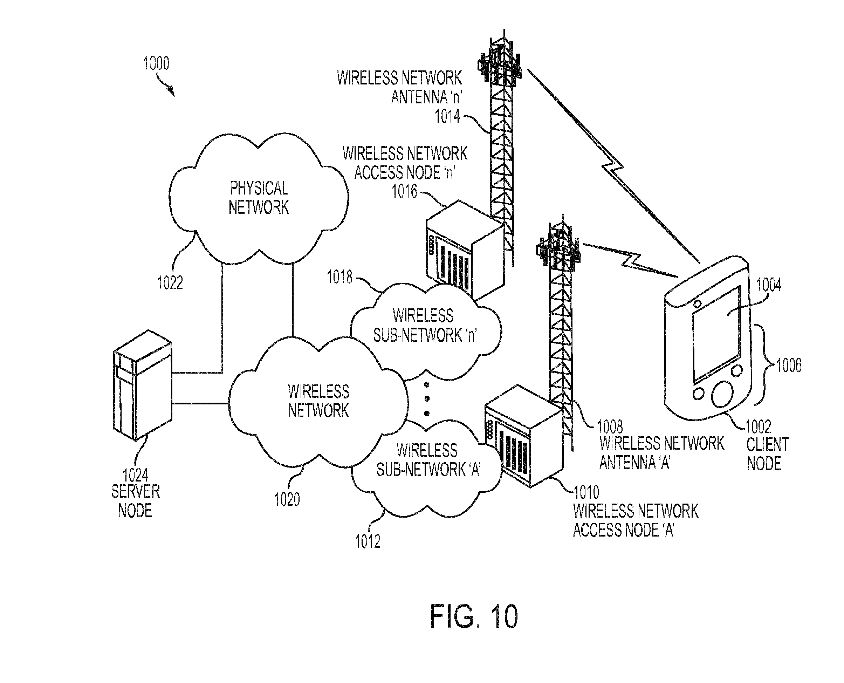

Figure 10 illustrates a wireless-enabled communications environment including an embodiment of a client node as implemented in an embodiment of the disclosure. Though illustrated as a mobile phone, the client node 1002 may take various forms including a wireless handset, a pager, a smart phone, or a personal digital assistant (PDA). In various embodiments, the client node 1002 may also comprise a portable computer, a tablet computer, a laptop computer, or any computing device operable to perform data communication operations. Many suitable devices combine some or all of these functions. In some embodiments, the client node 1002 is not a general purpose computing device like a portable, laptop, or tablet computer, but rather is a special-purpose communications device such as a telecommunications device installed in a vehicle. The client node 1002 may likewise be a device, include a device, or be included in a device that has similar capabilities but that is not transportable, such as a desktop computer, a set-top box, or a network node. In these and other embodiments, the client node 1002 may support specialized activities such as gaming, inventory control, job control, task management functions, and so forth.

In various embodiments, the client node 1002 includes a display 1004. In these and other embodiments, the client node 1002 may likewise include a touch-sensitive surface, a keyboard or other input keys 1006 generally used for input by a user. The input keys 1006 may likewise be a full or reduced alphanumeric keyboard such as QWERTY, DVORAK, AZERTY, and sequential keyboard types, or a traditional numeric keypad with alphabet letters associated with a telephone keypad. The input keys 1006 may likewise include a trackwheel, an exit or escape key, a trackball, and other navigational or functional keys, which may be moved to different positions, e.g., inwardly depressed, to provide further input function. The client node 1002 may likewise present options for the user to select, controls for the user to actuate, and cursors or other indicators for the user to direct.

The client node 1002 may further accept data entry from the user, including numbers to dial or various parameter values for configuring the operation of the client node 1002. The client node 1002 may further execute one or more software or firmware applications in response to user commands. These applications may configure the client node 1002 to perform various customized functions in response to user interaction. Additionally, the client node 1002 may be programmed or configured over-the-air (OTA), for example from a wireless network access node 'A' 1010 through 'n' 1016 (e.g., a base station), a server node 1024 (e.g., a host computer), or a peer client node 1002.

Among the various applications executable by the client node 1002 are a web browser, which enables the display 1004 to display a web page. The web page may be obtained from a server node 1024 through a wireless connection with a wireless network 1020. As used herein, a wireless network 1020 broadly refers to any network using at least one wireless connection between two of its nodes. The various applications may likewise be obtained from a peer client node 1002 or other system over a connection to the wireless network 1020 or any other wirelessly-enabled communication network or system.

In various embodiments, the wireless network 1020 comprises a plurality of wireless sub-networks (e.g., cells with corresponding coverage areas) 'A' 1012 through 'n' 1018. As used herein, the wireless sub-networks 'A' 1012 through 'n' 1018 may variously comprise a mobile wireless access network or a fixed wireless access network. In these and other embodiments, the client node 1002 transmits and receives communication signals, which are respectively communicated to and from the wireless network nodes 'A' 1010 through 'n' 1016 by wireless network antennas 'A' 1008 through 'n' 1014 (e.g., cell towers). In turn, the communication signals are used by the wireless network access nodes 'A' 1010 through 'n' 1016 to establish a wireless communication session with the client node 1002. As used herein, the network access nodes 'A' 1010 through 'n' 1016 broadly refer to any access node of a wireless network. As shown in Figure 10, the wireless network access nodes 'A' 1010 through 'n' 1016 are respectively coupled to wireless sub-networks 'A' 1012 through 'n' 1018, which are in turn connected to the wireless network 1020.

In various embodiments, the wireless network 1020 is coupled to a core network 1022, e.g., a global computer network such as the Internet. Via the wireless network 1020 and the core network 1022, the client node 1002 has access to information on various hosts, such as the server node 1024. In these and other embodiments, the server node 1024 may provide content that may be shown on the display 1004 or used by the client node processor 1010 for its operations. Alternatively, the client node 1002 may access the wireless network 1020 through a peer client node 1002 acting as an intermediary, in a relay type or hop type of connection. As another alternative, the client node 1002 may be tethered and obtain its data from a linked device that is connected to the wireless sub-network 1012. Skilled practitioners of the art will recognize that many such embodiments are possible and the foregoing is not intended to limit the spirit, scope, or intention of the disclosure.

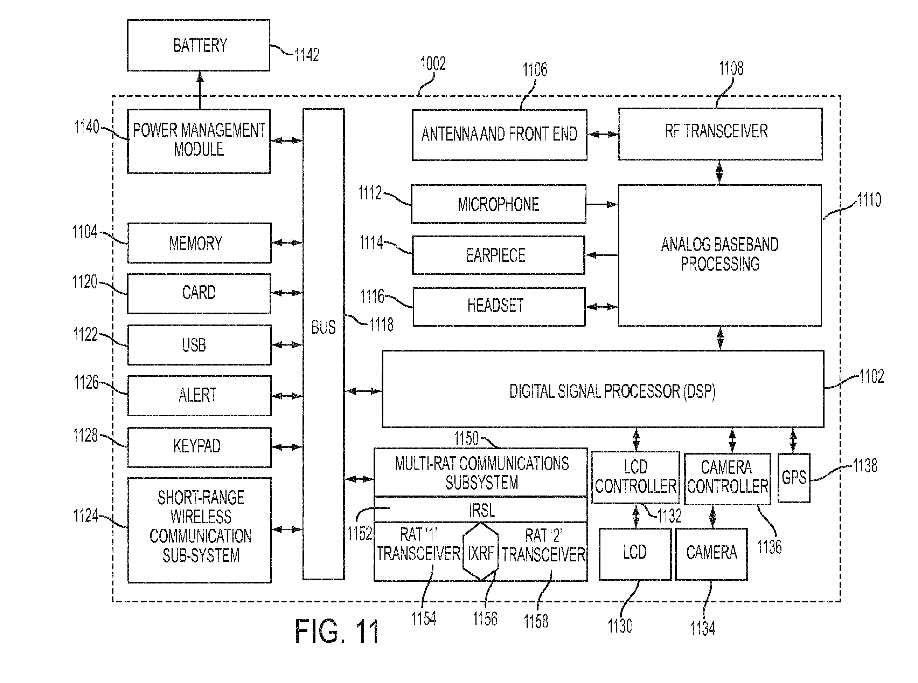

Figure 11 depicts a block diagram of an exemplary client node as implemented with a digital signal processor (DSP) in accordance with an embodiment of the disclosure. While various components of a client node 1002 are depicted, various embodiments of the client node 1002 may include a subset of the listed components or additional components not listed. As shown in Figure 11, the client node 1002 includes a DSP 1102 and a memory 1104. As shown, the client node 1002 may further include an antenna and front end unit 1106, a radio frequency (RF) transceiver 1108, an analog baseband processing unit 1110, a microphone 1112, an earpiece speaker 1114, a headset port 1116, a bus 1118, such as a system bus or an input/output (I/O) interface bus, a removable memory card 1120, a universal serial bus (USB) port 1122, a short range wireless communication sub-system 1124, an alert 1126, a keypad 1128, a liquid crystal display (LCD) 1130, which may include a touch sensitive surface, an LCD controller 1132, a charge-coupled device (CCD) camera 1134, a camera controller 1136, and a global positioning system (GPS) sensor 1138, and a power management module 1140 operably coupled to a power storage unit, such as a battery 1142. In various embodiments, the client node 1002 may include another kind of display that does not provide a touch sensitive screen. In one embodiment, the DSP 1102 communicates directly with the memory 1104 without passing through the input/output interface ("Bus") 1118.

In various embodiments, the DSP 1102 or some other form of controller or central processing unit (CPU) operates to control the various components of the client node 1002 in accordance with embedded software or firmware stored in memory 1104 or stored in memory contained within the DSP 1102 itself. In addition to the embedded software or firmware, the DSP 1102 may execute other applications stored in the memory 1104 or made available via information media such as portable data storage media like the removable memory card 1120 or via wired or wireless network communications. The application software may comprise a compiled set of machine-readable instructions that configure the DSP 1102 to provide the desired functionality, or the application software may be high-level software instructions to be processed by an interpreter or compiler to indirectly configure the DSP 1102.

The antenna and front end unit 1106 may be provided to convert between wireless signals and electrical signals, enabling the client node 1002 to send and receive information from a cellular network or some other available wireless communications network or from a peer client node 1002. In an embodiment, the antenna and front end unit 1106 may include multiple antennas to support beam forming and/or multiple input multiple output (MIMO) operations. As is known to those skilled in the art, MIMO operations may provide spatial diversity, which can be used to overcome difficult channel conditions or to increase channel throughput. Likewise, the antenna and front-end unit 1106 may include antenna tuning or impedance matching components, RF power amplifiers, or low noise amplifiers.

In various embodiments, the RF transceiver 1108 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/ despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 1110 or the DSP 1102 or other central processing unit. In some embodiments, the RF Transceiver 1108, portions of the Antenna and Front End 1106, and the analog base band processing unit 1110 may be combined in one or more processing units and/or application specific integrated circuits (ASICs).

Note that in this diagram the radio access technology (RAT) RAT1 and RAT2 transceivers 1154, 1158, the IXRF 1156, the IRSL 1152 and Multi-RAT subsystem 1150 are operably coupled to the RF transceiver 1108 and analog baseband processing unit 1110 and then also coupled to the antenna and front end 1106 via the RF transceiver 1108. As there may be multiple RAT transceivers, there will typically be multiple antennas or front ends 1106 or RF transceivers 1108, one for each RAT or band of operation.

The analog baseband processing unit 1110 may provide various analog processing of inputs and outputs for the RF transceivers 1108 and the speech interfaces (1112, 1114, 1116). For example, the analog baseband processing unit 1110 receives inputs from the microphone 1112 and the headset 1116 and provides outputs to the earpiece 1114 and the headset 1116. To that end, the analog baseband processing unit 1110 may have ports for connecting to the built-in microphone 1112 and the earpiece speaker 1114 that enable the client node 1002 to be used as a cell phone. The analog baseband processing unit 1110 may further include a port for connecting to a headset or other hands-free microphone and speaker configuration. The analog baseband processing unit 1110 may provide digital-to-analog conversion in one signal direction and analog-to-digital conversion in the opposing signal direction. In various embodiments, at least some of the functionality of the analog baseband processing unit 1110 may be provided by digital processing components, for example by the DSP 1102 or by other central processing units.

The DSP 1102 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 1102 may perform modulation, coding, interleaving, and spreading, and for a receiver function the DSP 1102 may perform despreading, deinterleaving, decoding, and demodulation. In another embodiment, for example in an orthogonal frequency division multiplex access (OFDMA) technology application, for the transmitter function the DSP 1102 may perform modulation, coding, interleaving, inverse fast Fourier transforming, and cyclic prefix appending, and for a receiver function the DSP 1102 may perform cyclic prefix removal, fast Fourier transforming, deinterleaving, decoding, and demodulation. In other wireless technology applications, yet other signal processing functions and combinations of signal processing functions may be performed by the DSP 1102.

The DSP 1102 may communicate with a wireless network via the analog baseband processing unit 1110. In some embodiments, the communication may provide Internet connectivity, enabling a user to gain access to content on the Internet and to send and receive e-mail or text messages. The input/output interface 1118 interconnects the DSP 1102 and various memories and interfaces. The memory 1104 and the removable memory card 1120 may provide software and data to configure the operation of the DSP 1102. Among the interfaces may be the USB interface 1122 and the short range wireless communication sub-system 1124. The USB interface 1122 may be used to charge the client node 1002 and may also enable the client node 1002 to function as a peripheral device to exchange information with a personal computer or other computer system. The short range wireless communication sub-system 1124 may include an infrared port, a Bluetooth interface, an IEEE 802.11 compliant wireless interface, or any other short range wireless communication sub-system, which may enable the client node 1002 to communicate wirelessly with other nearby client nodes and access nodes. The short-range wireless communication Sub-system 1124 may also include suitable RF Transceiver, Antenna and Front End subsystems.

The input/output interface ("Bus") 1118 may further connect the DSP 1102 to the alert 1126 that, when triggered, causes the client node 1002 to provide a notice to the user, for example, by ringing, playing a melody, or vibrating. The alert 1126 may serve as a mechanism for alerting the user to any of various events such as an incoming call, a new text message, and an appointment reminder by silently vibrating, or by playing a specific pre-assigned melody for a particular caller.

The keypad 1128 couples to the DSP 1102 via the I/O interface ("Bus") 1118 to provide one mechanism for the user to make selections, enter information, and otherwise provide input to the client node 1002. The keyboard 1128 may be a full or reduced alphanumeric keyboard such as QWERTY, DVORAK, AZERTY and sequential types, or a traditional numeric keypad with alphabet letters associated with a telephone keypad. The input keys may likewise include a trackwheel, track pad, an exit or escape key, a trackball, and other navigational or functional keys, which may be inwardly depressed to provide further input function. Another input mechanism may be the LCD 1130, which may include touch screen capability and also display text and/or graphics to the user. The LCD controller 1132 couples the DSP 1102 to the LCD 1130.

The CCD camera 1134, if equipped, enables the client node 1002 to make digital pictures. The DSP 1102 communicates with the CCD camera 1134 via the camera controller 1136. In another embodiment, a camera operating according to a technology other than Charge Coupled Device cameras may be employed. The GPS sensor 1138 is coupled to the DSP 1102 to decode global positioning system signals or other navigational signals, thereby enabling the client node 1002 to determine its position. The GPS sensor 1138 may be coupled to an antenna and front end (not shown) suitable for its band of operation. The GPS sensor 1138 may include both the GNSS chipset 106, RF front end 104 and antenna 102. Various other peripherals may also be included to provide additional functions, such as radio and television reception.

In various embodiments, the client node (e.g., 1002) comprises a first Radio Access Technology (RAT) transceiver 1154 and a second RAT transceiver 1158. As shown in Figure 11, and described in greater detail herein, the RAT transceivers '1' 1154 and '2' 1158 are in turn coupled to a multi-RAT communications subsystem 1150 by an Inter-RAT Supervisory Layer Module 1152. In turn, the multi- RAT communications subsystem 1150 is operably coupled to the Bus 1118. Optionally, the respective radio protocol layers of the first Radio Access Technology (RAT) transceiver 1154 and the second RAT transceiver 1158 are operably coupled to one another through an Inter-RAT eXchange Function (IRXF) Module 1156.

In various embodiments, the network node (e.g. 824) acting as a server comprises a first communication link corresponding to data to/from the first RAT and a second communication link corresponding to data to/from the second RAT.

Therefore, in one aspect, a method of determining a position of a mobile cellular communication device includes: receiving a pseudolites signal in a first frequency band at an antenna of the mobile cellular communication device; converting the pseudolites signal from the first frequency to a corresponding positioning signal in a GNSS frequency band; delivering the converted positioning signal to a GNSS chipset of the mobile cellular communication device; and determining the position of the mobile cellular communication device at the GNSS chipset using the converted positioning signal.

In another aspect, a mobile cellular communication device includes: a receiver antenna for receiving positioning signals; a GNSS chipset for determining a location of the mobile cellular communication device using positioning signals in a GNSS frequency band; and a circuit coupled to the receiver antenna and the GNSS receiver chipset that receives the positioning signal in a an M-LMS frequency band, converts the signal to the GNSS frequency band and delivers the converted signal to the GNSS chipset.

In another aspect, a circuit for determining a location of a mobile device includes: a receiver antenna for receiving positioning signals; and an M-LMS circuit branch coupled to the receiver antenna and a GNSS chipset configured to receive the M-LMS signals and converts the M-LMS signals to an equivalent positioning signal in the GNSS frequency band and deliver the converted positioning signal to the GNSS chipset.

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method of determining a position of a mobile cellular communication device, the method comprising:

   receiving a pseudolites signal in a first frequency band at an antenna of the mobile cellular communication device; converting the pseudolites signal from the first frequency band to a corresponding positioning signal in a Global Navigation Satellite System (GNSS) frequency band; and
   determining the position of the mobile cellular communication device at the GNSS chipset of the mobile cellular communication device using the converted positioning signal.

2. The method of claim 1, further comprising receiving the pseudolites signal when a reliability of a GNSS positioning signal received at the antenna is less than a selected threshold.

3. The method of claim 2, further comprising determining the position of the mobile cellular communication device usingz the GNSS signal when the reliability of the GNSS positioning signal received at the antenna is greater than the selected threshold.

4. The method of claim 1, wherein the GNSS frequency band is at least one of: an L1 band; an L2 band; and an L5 band.

5. The method of claim 1, further comprising mixing the pseudolite signal with a local oscillator signal to convert the pseudolites signal from the first frequency band to the GNSS frequency band.

6. The method of claim 5, further comprising applying a filter to the converted positioning signal prior to delivering the converted positioning signal to the GNSS chipset in order to remove other signals created in other frequency bands during the conversion process.

7. The method of claim 1, further comprising correcting the determined position of the mobile cellular communication device for altitude using a measurement from a micro-electromechanical pressure sensor.

8. A mobile cellular communication device, the device comprising:

a receiver antenna configured to receive Multilateration Location and Monitoring Service (M-LMS) positioning signals; and
a circuit configured to receive the M-LMS positioning signals in an M-LMS frequency band, and convert the M-LMS positioning signals to equivalent positioning signals in a Global Navigation Satellite System (GNSS) frequency band; and
a GNSS chipset configured to determine a location of the mobile cellular communication device using the converted positioning signals in the GNSS frequency band.

9. The device of claim 8, further comprising a control unit configured to select an M-LMS radio frequency (RF) front end circuit branch when a reliability of a GNSS positioning signal received at the antenna is less than a selected threshold.

10. The device of claim 9, wherein the control unit selects a GNSS RF front end circuit branch when the reliability of the GNSS positioning signal received at the antenna is greater than the selected threshold.

11. The device of claim 8 wherein the GNSS frequency band is at least one of: an L1 band; an L2 band; and an L5 band.

12. The device of claim 8 further comprising a Fractional-N Synthesizer configured to supply a local oscillator frequency for converting the M-LMS positioning signal from the M-LMS band to the converted positioning signal in the GNSS frequency band.

13. The device of claim 12, further comprising a filter configured to remove converted positioning signals outside of the GNSS frequency band.

14. The device of claim 8, further comprising a module configured to correct the determined position of the mobile device for altitude using a measurement from a MEMS pressure sensor.

15. The device of claim 8, wherein the circuit further comprises an M-LMS circuit branch coupled to the receiver antenna and a Global Navigation Satellite System (GNSS) chipset, the M-LMS circuit branch configured to receive the M-LMS positioning signals, convert the M-LMS positioning signals to an equivalent positioning signal in a GNSS frequency band, and deliver the converted positioning signal to the GNSS chipset.

FIG. 1

GNSS ANTENNA (L1 =1575.42MHz TO 1615 MHz)

TUNABLE MATCHING NETWORK

MULTILATERATION LOCATION AND MONITORING SERVICE (M-LMS) IN THE 902 - 928 MHz BAND

M-LMS Band 926 MHz

M-LMS SAW BPF

MLMS LAN

UP-CONVERTER MIXER/BPF MODULE

BAND PASS (fRF2 REJECTION FILTER)

GNSS RECEIVER CHIPSET

SPDT RF SWITCH

PSEUDOLITES/GNSS RX ENABLE/DISABLE

SPDT RF SWITCH

L1 GPS BAND 1575.42 MHz

RF INPUT

plh SOLUTION (Lat, Long, Alt)

GNSS L1 BAND( 1575.42MHz TO 1615MHz)

GNSS SAW BPF

GNSS LAN

Frac-N SYNTHESIZER

L1 GPS BAND 1575.42 MHz

L1 GPS BAND 1575.42 MHz

REF CLOCK INPUT

DIGITAL CONTROL LOGIC UNIT

ENABLE/DISABLE GNSS OR M-LMS PSEUDOLITES RECEIVER LOGIC CONTROL UNIT

DUAL OUTPUT TCXO REFERENCE OSCILLATOR

EP 2 878 974 A2

FIG. 2

FIG. 3

INDOOR/URBAN/CANYON CONDITIONS ← → OUTDOOR OPEN SKY CONDITIONS

M-LMS ANTENNA (926MHz)

GNSS ANTENNA-L1

400

102a   108

410

102b   110

M-LMS RF FRONT END

MOBILE DEVICE SENSORS & MEMS

GNSS RF FRONT END

402

106

GPS CHIPSET RECEIVER CORE
(GPS/M-LMS RF & BASEBAND)

412

M-LMS RECEIVER MEASUREMENT ENGINE

CONTEXT AWARE AND ENVIRONMENTAL DETECTION MODULE

GNSS RECEIVER MEASUREMENT ENGINE   414

420

404

416

M-LMS RECEIVER POSITIONING ENGINE

Lat2, long2, alt2

POSITION POST PROCESSOR MODULE & OPTIMIZER

Lat1, long, alt1

GNSS RECEIVER POSITIONING ENGINE   418

422

Lat_opt, long_opt, alt_opt

406

UI AND APPLICATION

424

FIG. 4

EP 2 878 974 A2

14

EP 2 878 974 A2

INDOOR/URBAN/CANYON
CONDITIONS

OUTDOOR OPEN SKY
CONDITIONS

M-LMS ANTENNA (926MHz)

GNSS ANTENNA-L1

M-LMS RECEIVER
MEASUREMENT &
POSITIONING ENGINE

502

(plh SOLUTION
Lat, Long, Alt)

hPa, TEMP,
ALTITUDE

508

ALTITUDE
CORRECTION AND
PRESSURE DATA
PROCESSING

hPa, TEMP,
ALTITUDE

GNSS RECEIVER
MEASUREMENT &
POSITIONING ENGINE

504

(plh SOLUTION
Lat, Long, Alt)

MEMS
PRESSURE
SENSOR

506

FIG. 5

FIG. 6

INDOOR/URBAN/CANYON CONDITIONS ← → OUTDOOR OPEN SKY CONDITIONS

M-LMS ANTENNA (926MHz)

GNSS ANTENNA-L1

700

M-LMS RECEIVER MEASUREMENT & POSITIONING ENGINE

(plh SOLUTION Lat, Long, Alt)

702

GYRO x,y,z
ACCELEROMETER x,y,z
COMPASS x,y,z

706

MEMS INERTIAL SENSORS (9 DoF SENSORS)

GYRO x,y,z
ACCELEROMETER x,y,z
COMPASS x,y,z

GNSS RECEIVER MEASUREMENT & POSITIONING ENGINE

(plh SOLUTION Lat, Long, Alt)

704

FIG. 7

EP 2 878 974 A2

17

800

```
┌─────────────────────────────┐
│  DETERMINE AN ENVIRONMENT OF │
802 ─│      THE MOBILE DEVICE       │
└─────────────────────────────┘
              │
              ▼
┌─────────────────────────────┐
│   SELECT A POSITIONING SIGNAL│
│    BASED ON THE DETERMINED   │                          808
804 ─│  ENVIRONMENT OF THE MOBILE   │
│            DEVICE            │
└─────────────────────────────┘
              │
              ▼                              ┌─────────────────────────────┐
┌─────────────────────────────┐   NO   │    PROCESS GNSS POSITIONING  │
│     M-LMS POSITIONING SIGNALS│─────────▶│ SIGNALS FOR DELIVERY TO GNSS │
806 ─│          SELECTED?           │         │           CHIPSET            │
└─────────────────────────────┘         └─────────────────────────────┘
              │YES
              ▼
┌─────────────────────────────┐
│     PROCESS M-LMS POSITIONING│
810 ─│           SIGNALS            │
└─────────────────────────────┘
              │
              ▼
┌─────────────────────────────┐
│        UP-CONVERT M-LMS      │
│     POSITIONING SIGNALS TO AN│
812 ─│  EQUIVALENT POSITIONING SIGNAL│
│    IN THE GNSS FREQUENCY BAND│
└─────────────────────────────┘
              │
              ▼
┌─────────────────────────────┐
│       FILTER UP-CONVERTED    │
│  POSITIONING SIGNAL AND DELIVER│
814 ─│        TO THE GNSS CHIPSET   │
└─────────────────────────────┘
              │
              ▼
┌─────────────────────────────┐
│    DETERMINE POSITION AT GNSS│
816 ─│ CHIPSET USING THE UP-CONVERTED│
│       POSITIONING SIGNAL     │
└─────────────────────────────┘
```

FIG. 8

FIG. 9

900

920 NETWORK CONNECTIVITY

910 PROCESSOR

930 RAM

940 ROM

950 SECONDARY STORAGE

960 I/O

1000

WIRELESS NETWORK
ANTENNA 'n'
1014

WIRELESS NETWORK
ACCESS NODE 'n'
1016

PHYSICAL
NETWORK

1022

1018

WIRELESS
SUB-NETWORK 'n'

1004

1006

WIRELESS
NETWORK

1008
WIRELESS NETWORK
ANTENNA 'A'

1002
CLIENT
NODE

1024
SERVER
NODE

1020

WIRELESS
SUB-NETWORK 'A'

1010
WIRELESS NETWORK
ACCESS NODE 'A'

1012

FIG. 10

FIG. 11